# EUROPEAN PATENT SPECIFICATION

(11) **EP 2 341 509 B1**
(45) Date of publication and mention of the grant of the patent: **19.09.2012**
(21) Application number: 10015859.1
(22) Date of filing: 21.12.2010
(51) Int. Cl.: G21C 3/30, G21C 3/33, G21C 3/32, G21C 19/307

(54) **Nuclear fuel assembly debris filter bottom nozzle**
Untere Düse zum Filtrieren von Trümmern von Kernbrennstabbündeln
Capte-débris d'un embout inférieur d'un assemblage de combustible nucléaire

(30) Priority: 05.01.2010 US 652187
(43) Date of publication of application: 06.07.2011
(73) Proprietor: Westinghouse Electric Company Llc, Cranberry Township, PA 16066 (US)
(72) Inventor: Yurily, Aleshin, Columbia, SC 29209 (US)
(74) Representative: Gallo, Wolfgang

(56) References cited:
- EP-A1- 0 455 011
- EP-A1- 0 620 558
- US-A- 4 664 880
- US-A- 4 678 627
- US-A- 5 030 412

## Description

### BACKGROUND OF THE INVENTION

### 1. Field of the Invention

The present invention relates generally to nuclear reactors and, more particularly, is concerned with a debris filter bottom nozzle for a pressurized water reactor nuclear fuel assembly.

### 2. Related Art

During manufacturing, subsequent installation and repair of components comprising a nuclear reactor coolant circulation system, diligent effort is made to help assure removal of all debris from the reactor vessel and its associated systems, which circulate coolant throughout the primary reactor coolant loop under various operating conditions. Although elaborate procedures are carried out to help assure debris removal, experience shows that in spite of the safeguards used to effect such removal, some chips and metal particles still remain hidden in the system. Most of the debris consists of metal turnings, which were probably left in the primary system after steam generator repair or replacement.

In particular, fuel assembly damage due to debris trapped at the lower most grid has been noted in several reactors in recent years. Debris enters through the fuel assembly bottom nozzle flow holes from the coolant flow openings in the lower core support plate when the plant is started up. The debris tends to become lodged in the lower most support grid of the fuel assembly within spaces between the "egg crate" shaped cell walls of the grid and the lower end portions of the fuel rod tubes. The damage consists of fuel rod tube perforations caused by -frettings of the debris in contact with the exterior of the fuel rod tube or cladding. Debris also becomes entangled in the nozzle plate holes and the flowing coolant causes the debris to gyrate which tends to cut through the cladding of the fuel rods.

Several different approaches have been proposed and tried for carrying out the removal of debris from nuclear reactors. Many of these approaches are discussed in U.S. Patent No. 4,096,032 to Mayers et al. Others are illustrated and described in various patents cross referenced in U.S. Patent No. 4,900,507 and in U.S. Publication US2005/0157836, assigned to the instant Assignee. While all of the approaches described in the cited patent, published application and cross references operate reasonably well and generally achieve their objectives under the range of operating conditions for which they were designed, a need still exists for a further improved approach to the problem of debris filtering in nuclear reactors, to obtain an improved reduction in debris that passes up through the flow holes of the bottom nozzle.

A further filtering arrangement is known from document US 5 030 412 A which discloses a debris filter bottom nozzles which comprises corrugated blades. Documents US 4 678 627 A and US 4 664 880 A disclose debris filter bottom nozzles comprising bent metal sheets and bent wire meshes, respectively.

### SUMMARY OF THE INVENTION

The present invention provides a debris filter bottom nozzle for a nuclear fuel assembly designed to satisfy the aforementioned need. The bottom nozzle of the present invention includes a substantially horizontal adapter plate extending approximately transverse to the axis of the fuel rods and having an upper face directed toward the lower most grid of the nuclear fuel assembly. The upper face of the adapter plate has a plurality of holes defined therethrough for the passage of coolant fluid from a lower face to the upper face of the adapter plate. The flow through holes may be similar to those described in U.S. published Application 2005/0157836. Each of the coolant flow through holes extends substantially in the axial direction of the fuel rods, and are in fluid communication with unoccupied spaces in the lower most grid of the fuel assembly. A skirt circumscribes the lower face of the adapter plate and a corrugated undulating screen extends across a lower portion of the skirt to substantially cover a bottom portion thereof and form a plenum between the lower face of the adapter plate and the screen. Preferably, holes are provided in slanted portions of the corrugated screen and in the skirt for the passage of coolant into the plenum wherein the coolant changes direction to pass through the flow through holes in the adapter plate.

The screen is a metal sheet which is bent into a corrugated undutating form.

In one embodiment, the corrugations in the screen have a predetermined amount of elasticity and are compressed so that they exert a force on opposite walls of the skirt on which an end of the corrugations abut. Preferably, the screen is constructed of a material that has substantially the same coefficient of thermal expansion as the skirt and desirably, the corrugated undulating screen is supported by pins that extend between opposite walls of the skirt. Generally, the pins are flush with the outside surface of the walls of the skirt and pass through holes in the undulating screen. Preferably, the tops and bottoms of the undulations in the screen have no flow through holes and are rounded and desirably, the flow holes in the screen are formed as slots smaller than or equal to the length of debris that the screen is intended to trap and the width of the slots is less than or equal to a diameter of the debris. Desirably, the slots are arranged horizontally.

### BRIEF DESCRIPTION OF THE DRAWINGS

A further understanding of the invention can be gained from the following description of the preferred embodiments when read in conjunction with accompanying drawings in which:

Figure 1 is a elevational view, partially in section, of a fuel assembly in which the preferred embodiment of the debris trapping bottom nozzle of the present invention is incorporated, the assembly being illustrated in vertically shortened form with parts broken away for clarity;

Figure 2 is a perspective view of a section of the debris filter bottom nozzle of this invention taken along a center section thereof;

Figure 3 is a perspective view of a quarter section of the debris filter bottom nozzle of this invention providing a clear view of the corrugated undulating screen;

Figure 4 is a schematic side view of a quarter section of the debris filter bottom nozzle of this invention;

Figure 5 is a full perspective view of the bottom nozzle debris filter of this invention illustrating the flow through and pin holes on two sides of the skirt;

Figure 6 is a perspective view of the skirt shown in Figure 5;

Figure 7 is a top perspective view of the corrugated undulating screen employed by the debris filter bottom nozzle of this invention;

Figure 8 is a side perspective view of the undulating screen of this invention showing the debris trapping slots of this invention; and

Figure 9 is a schematic side view of the corrugated undulating screen shown in Figures 7 and 8.

### DESCRIPTION OF THE PREFERRED EMBODIMENT

In the following description, like reference characters designate like or corresponding parts throughout the several views of the drawings. Also, in the following description, it is to be understood that such terms as "forward", "rearward", "left", "right", "upwardly", "downwardly" and the like are words of convenience and are not to be construed as limiting terms.

### Fuel Assembly

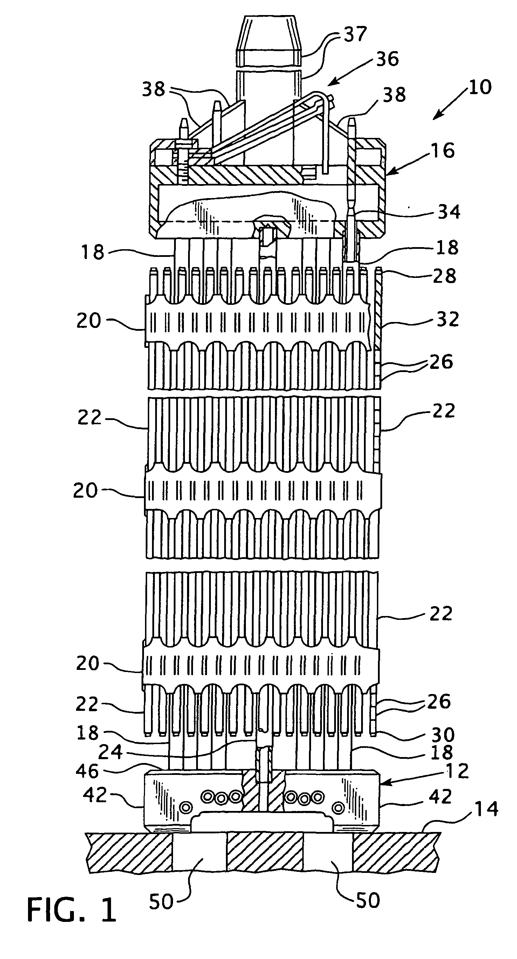

Referring to the drawings and particularly to Figure 1, there is shown an elevational view of a fuel assembly represented in vertically shortened form and being generally designated by reference numeral 10. The fuel assembly 10 is the type used in a pressurized water reactor and has a structural skeleton which, at its lower end, includes the debris filter bottom nozzle 12 of the present invention (which will be described in detail below). The bottom nozzle 12 supports the fuel assembly 10 on a lower core support plate 14 in the core region of the nuclear reactor (not shown). In addition to the bottom nozzle 12, the structural skeleton of the fuel assembly 10 also includes a top nozzle 16 at its upper end and a number of guide tubes or thimbles 18, which extend longitudinally between the bottom and top nozzles 12 and 16 and at opposite ends are rigidly attached thereto.

The fuel assembly 10 further includes a plurality of transverse grids 20 axially spaced along, and mounted to, the guide thimble tubes 18 and an organized array of elongated fuel rods 22 transversely spaced and supported by the grids 20. Also, the assembly 10 has an instrumentation tube 24 located in the center thereof and extending between, and mounted to, the bottom and top nozzles 12 and 16. With such an arrangement of parts, fuel assembly 10 forms an integral unit capable of being conveniently handled without damaging the assembly of parts.

As mentioned above, the fuel rods 22 in the array thereof in the assembly 10 are held in spaced relationship with one another by the grids 20 spaced along the fuel assembly length. Each fuel rod 22 includes nuclear fuel pellets 26 and is closed at opposite ends by upper and lower end plugs 28 and 30. The pellets 26 are maintained in a stack by a plenum spring 32 disposed between the upper end plug 28 and the top of the pellet stack. The fuel pellets 26, composed of fissile material, are responsible for creating the reactive power of the reactor. A liquid moderator/coolant such as water or water containing boron, is pumped upwardly through a plurality of flow openings in the lower core plate 14 to the fuel assembly. The bottom nozzle 12 of the fuel assembly 10 passes the coolant upwardly through the guide tubes 18 and along the fuel rods 22 of the assembly in order to extract heat generated therein for the production of useful work.

To control the fission process, a number of control rods 34 are reciprocally movable in the guide thimbles 18 located at predetermined positions in the fuel assembly 10. Specifically, a rod cluster control mechanism 36 is positioned above the top nozzle 16 and supports the control rods 34. The control mechanism has an internally threaded cylindrical member 37 with a plurality of radially extending flukes or arms 38. Each arm 38 is interconnected to a control rod 34 such that the control rod mechanism 36 is operable to move the control rods vertically in the guide thimbles 18 to thereby control the fission process in the fuel assembly 10, all in a well known manner.

### Debris Filter Bottom Nozzle

As mentioned above, fuel rod damage due to debris trapped at or below the lower most one of the grids 20 supporting the fuel bearing regions of the fuel rods has been found to be a problem. Leaking fuel rods due to debris has been identified by the Institute of Nuclear Power Operations as one of four leaking mechanisms that needs to be considered to achieve zero fuel failure by 2010. Reactor manufacturers such as Westinghouse Electric Company LLC, Pittsburgh, Pennsylvania, currently offer a number of features for minimizing the adverse affects of such debris, *i.e.,* debris filter bottom nozzles, protective lower most grids, extended fuel rod end plugs, fuel rod coating, etc. The existing debris filter bottom nozzle design (such as that described in U.S. published Application 2005/0157836) alone is not sufficient to prevent debris from passing into the core that has a potential for resulting in a fuel rod leak. The current debris filter bottom nozzle design blocks approximately 70% by weight of the metallic particles that could result in fuel clad failure from passing through the nozzle flow passages. The current debris filter bottom nozzle flow through holes have a diameter of approximately 0.19 inch (0.48 cm), which will not prevent long pieces of wire from passing through the flow passages in the bottom nozzle adapter plate since the flow holes are straight in the direction of flow. Therefore, to prevent the occurrence of fuel cladding damage, it is highly desirable to minimize such debris that passes through the bottom nozzle flow holes or the interfaces between the outlets of the bottom nozzle flow holes and the adjoining structures.

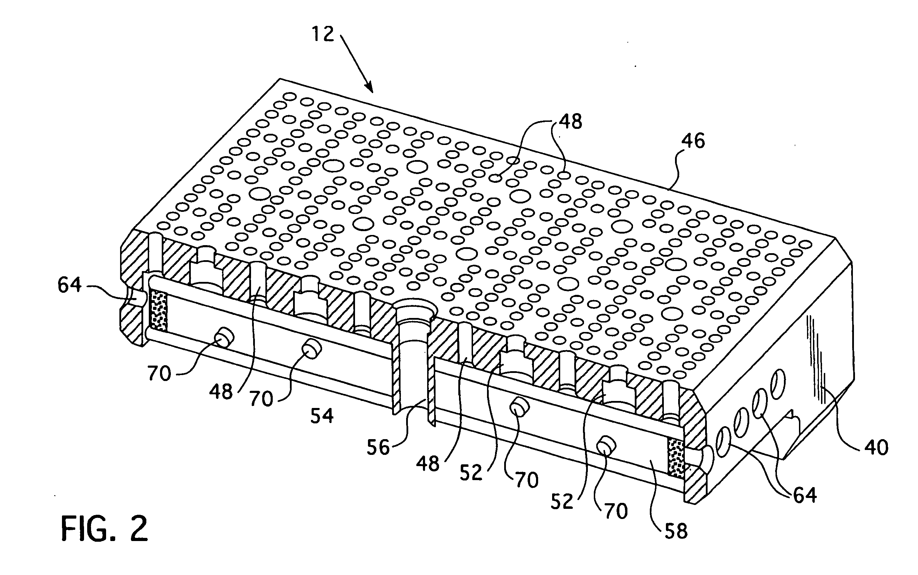

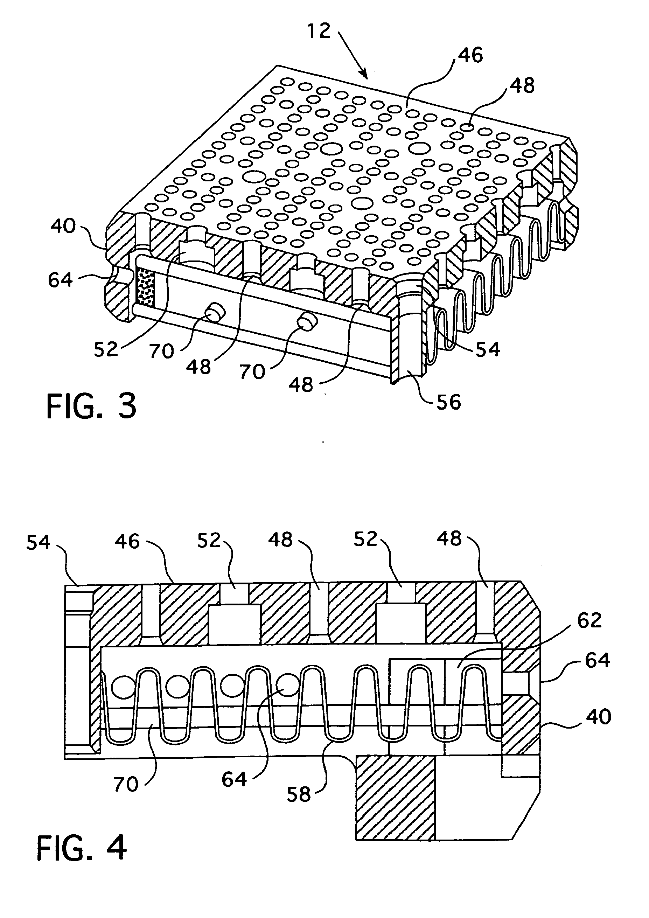

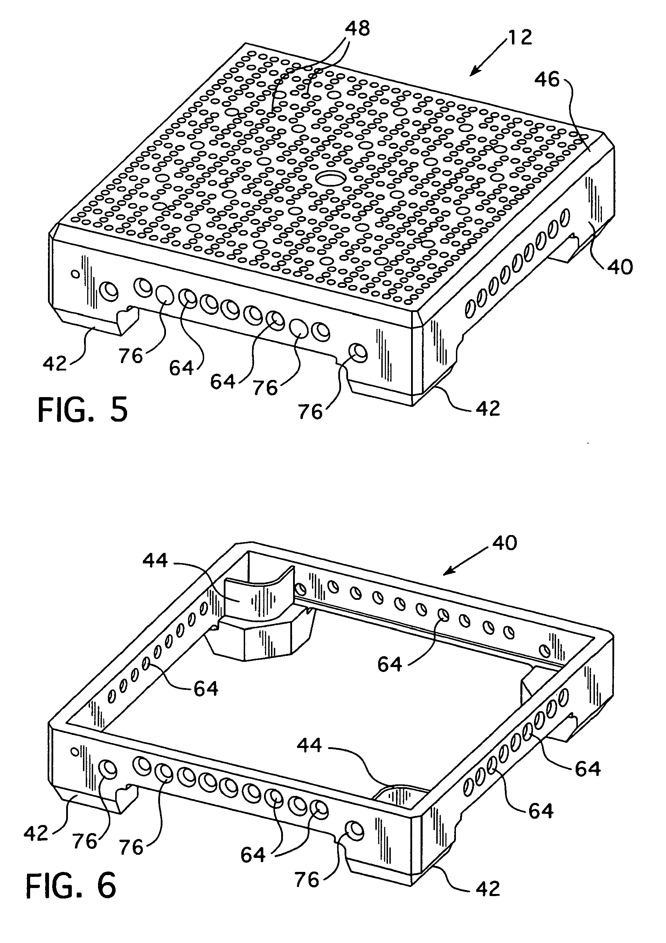

The present invention provides an improved bottom nozzle 12 which, in addition to supporting the fuel assembly 10 on the lower core support plate 14, also contains features which function to filter out potentially damaging sized debris from the coolant flow passed upwardly through the bottom nozzle. The bottom nozzle 12 includes support means, for example, the skirt 40 shown in Figures 5 and 6. The support means, i.e., the skirt 40 in this embodiment, includes a plurality of corner legs 42 for supporting the fuel assembly 10 on the lower core plate 14. Though not shown, the lower core support plate 14 includes a number of ) alignment pins that extend up vertically into the core and are received within at least two core pin receptacles 44 positioned on diagonally opposite corners of the skirt 40 as internal extensions of the corner legs 42. A generally rectangular planar adapter plate 46, which can be observed in Figure 5, is suitably attached, such as by welding, to the upper surface of the support skirt 40. A larger number of small flow through holes 48 in the adapter plate 46 are concentrated in the area of the flow holes 50 through the lower core support plate 14 and are sized to filter out damaging sized debris without adversely effecting flow or pressure drop through the bottom nozzle adapter plate 46 and across the fuel assembly 10. In this respect, the debris filter bottom nozzle 12 of this invention is very similar to that described in U.S. published Application 2005/0157836, assigned to the Assignee of this invention. The flow through holes 48 in the adapter plate can be ) better observed in the cross sectional views shown in Figures 2 and 3. In addition to the coolant flow through holes 48, the adapter plate 46 has two additional types of through holes 52 and 54. The through holes 52 receive fasteners that are screwed into the guide thimble lower end plugs to fasten the guide thimbles 18 to the adapter plate 46. The central through hole 54 aligns with the instrumentation tube 24 in the fuel assembly 10 and, in accordance with this invention, is connected to an extension tube 56 that continues from the underside of the adapter plate 46 through a debris protection screen 58 which extends across a lower portion of the skirt 40.

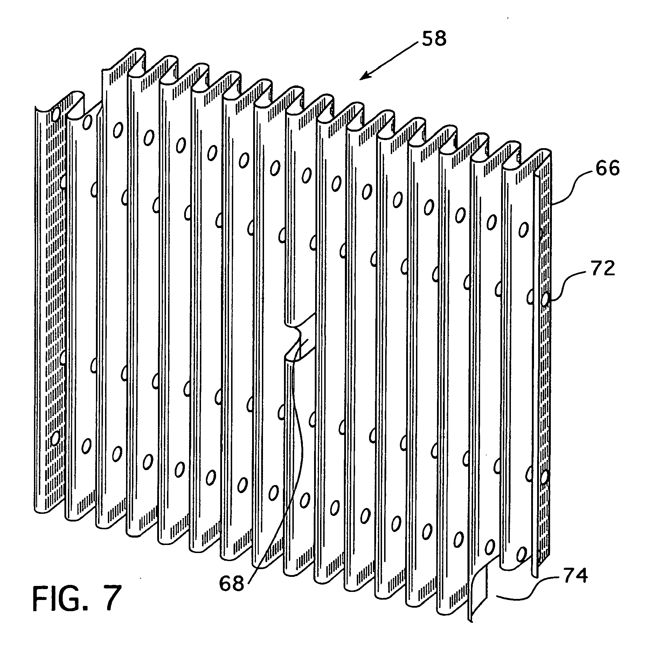

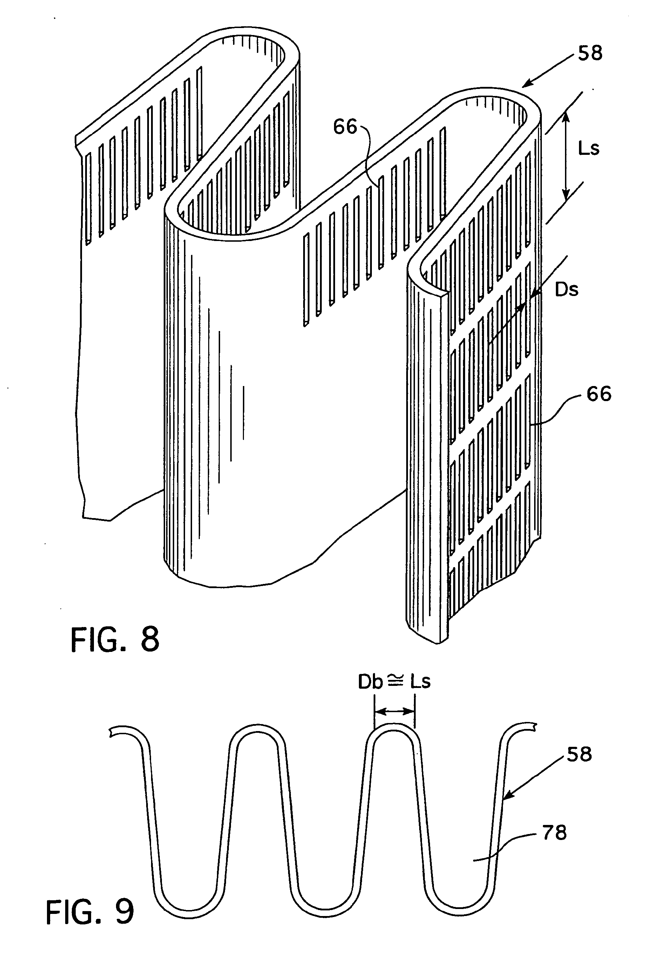

The screen is a metal sheet which is bent into a corrugated undulating form having a thickness approximately equal to or between 0.026 inches (0.066 cm) and 0.060 inches (0.152 cm) and should exhibit sufficient flexibility and elasticity at least equal to approximately half of the pitch of the corrugated screen folding form to allow for screen installation without additional permanent deformation (or permanent set) and provide a force on opposite walls of the skirt after installation. A central opening in the screen accommodates the extension tube 56 which can be flared at its lower end to avoid the bypass of debris at the interface of the extension tube 56 and the screen 58. The area between the screen 58, the interior side of the skirt 40 and the underside of the adapter plate 46 defines a plenum 62. Flow through holes 64 in the skirt 40 and slots 66 in the screen 58, which can best be appreciated from Figure 8, provide coolant access to the plenum 62 and the flow through holes 48 in the adapter plate 46. The shape of the screen can best be appreciated from the view shown in Figure 7. A central opening 68 forms the interface with the instrumentation extension tube and diagonally opposite cutouts 74 form the interface with the core pin receptacles 44. Screens can be inserted in the core pin receptacles 44 to avoid bypass of any debris. The screen 58 is supported by pins 70 that extend between openings 76 in opposing walls of the skirt 40 and through corresponding openings in the slanted sides of the screen 58. The pins 70 terminate within the holes 76 and do not extend past the outer surface of the skirt 40. The ends of the screen 58 may also be welded to the interior of the 5 skirt 40. In addition to the pin holes 72, slots 66 are provided in the slanted sidewalls of the screen 58 which, together with the flow through holes 64 in the skirt 40 provide coolant access to the plenum 62. As shown in Figure 4, the screen 58 is aligned with the holes 64 so that coolant is directed into the plenum 62.

The folded length of the screen 58 is sized to exceed the available room inside the skirt 40 so that the screen 58 is deformed during installation to restrict screen displacement. The perforation and bend characteristics are chosen to ensure that a predetermined size of metallic particles cannot pass through the screen. For this purpose, it is assumed that the metallic particles of interest have a cylindrical shape that can be characterized by an outer diameter (OD) and length (L). The perforation slot geometry should be consistent with those dimensions, i.e., slot length (Ls) should be less than or equal to L and slot width (Ds) should be less than or equal to OD. However, it should be appreciated that the geometry of the slot may vary and the number of slots should be sufficient to satisfy pressure drop requirements. As shown in Figure 9, the screen bend parameters should correspond with the slot 66 length to ensure that the "long" metal particles in the coolant will not be able to rotate above the screen 58 as shown in Figure 9. Preferably, the bend diameter (Db) should be approximately equal to the slot length (Ls). The lower bend area 78 then forms a collection point of the debris.

The pins 70 that are used to secure the screen 58 inside the skirt 40 can be secured within the holes 76 using a threaded joint between the pin and a pin nut (not shown) in a countersunk portion of the skirt holes 76. The pin nut can be secured by mechanical deformation of the nut head (similar to the guide thimble screw lock cup deformation presently employed).

As previously mentioned, it is desirable that the screen be slightly deformed during pin installation to restrict the screen's displacement during operation. Preferably, the fuel assembly is fabricated in accordance with the current process up to the point where the lower ) nozzle 12 is installed and secured. At that point, the screen 58 is inserted within the skirt 40 taking advantage of its flexibility and the pins are installed through the holes 76 in the skirt then threaded through the holes 72 in the screen 58 and secured with the pin nuts. The remainder of the process for assembling the fuel assembly 10 remains the same as is currently employed.

Accordingly, coolant emerging through the flow holes 50 in the lower core support plate 14 enters the lower nozzle through the slots 66 in the slanted sides of the corrugated undulating screen 58 and the flow through holes 64 in the skirt 40 and turns upward and through the flow through holes 48 to enter the lower most grid 20. In that way, debris that could likely damage the fuel cladding will settle out into the crevices 78 within the corrugations of the screen 58 before the coolant leaves the nozzle 12.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is defined in the appended claims.

### REFERENCE LIST

- 10: fuel assembly
- 12: bottom nozzle
- 14: lower core support plate
- 16: top nozzle
- 18: guide tubes
- 20: grids
- 22: fuel rods
- 24: instrumentation tube
- 26: fuel pellets
- 28: upper end plug
- 30: lower end plug
- 32: plenum spring
- 34: control rods
- 36: rod cluster control mechanism
- 37: spider hub
- 38: flukes
- 40: skirt
- 42: skirt legs
- 44: core pin receptacle
- 46: adapter plate
- 48: flow through holes
- 50: core support plate flow holes
- 52: control rod thimble holes
- 54: instrumentation tube hole
- 56: instrument extension tube
- 58: screen
- 62: plenum
- 64: flow holes in the skirt

- 66: slots in screen
- 68: instrument tube screen interface
- 70: screen support pins
- 72: pin holes in screen
- 74: support plate pin receptacle cutout
- 76: pin holes in the skirt
- 78: screen bend area

## Claims

1. A debris filter bottom nozzle (12) for a pressurized water nuclear reactor fuel assembly (10) having a plurality of elongated nuclear fuel rods (22) having an extended axial length, at least a lowermost grid (20) supporting said fuel rods (22) in an organized array and having unoccupied spaces defined therein adapted to allow flow of fluid coolant therethrough and past said fuel rods (22) when said fuel assembly is installed in the nuclear reactor, a plurality of guide thimble (18) extending along said fuel rods through and supporting said grid (20), said debris filter bottom nozzle (12) designed to be disposed below said grid (20), below lower ends of said fuel rods (12), to support said guide thimbles (18) and adapted to allow flow of fluid coolant into said fuel assembly, said debris filter bottom nozzle (12) comprising;
a substantially horizontal adapter plate (46) extending substantially transverse to the axis of the fuel rods (22) and having an upper face to be directed toward said lowermost grid (20), said upper face of said adapter plate (46) having defined therethrough a plurality of flow through holes (48) exending completely through said adapter plate (46) for the passage of coolant fluid from a lower face of said adapter plate to the upper face of said adapter plate, each of said coolant flow through holes when incorporated in said fuel assembly, extending substantially in the axial direction of said fuel rods (22) in fluid, communication with said unoccupied spaces; and
a skirt (40) having walls that circumscribes the lower face of said adapter plate;
wherein
screen (58) extends across a lower portion of said skirt (40) substantially covering a bottom thereof and forming a plenum (62) between the lower face of the adapter plate (46) and the screen (58);
**characterized in that**
the screen (58) is a metal sheet which is bent into a corrugated undulating form.

2. The debris filter bottom nozzle (12) of Claim 1 wherein corrugations in the screen (58) have a predetermined, positive amount of elasticity and are compressed so that they exert a force on opposite walls of the skirt (40) on which an end of the corrugations abut.

3. The debris filter bottom nozzle (12) of Claim 1 wherein the screen (58) is constructed of a material that has substantially the same coefficient of thermal expansion as the skin (40).

4. The debris filter bottom nozzle (12) of Claim 1 wherein the skirt (40) has flow through holes (64) in at least a portion of its walls that are in fluid communication with the plenum (62) berween the lower face of the adapter plate (46) and the screen (58).

5. The debris filter bottom nozzle (12) of Claim 4 wherein the debris filter bottom nozzle is substantially square having four sides and the flow through holes (64) are provided in all four sides of the skirt (40).

6. The debris filter bottom nozzle (12) of Claim 1 wherein the corrugated undulating screen (58) is supported by pins that extend between opposite ones of said walls of the skirt (40).

7. The debris filter bottom nozzle (12) of Claim 6 wherein the pins are flush with an outside surface of said walls.

8. The debris filter bottom nozzle (12) of Claim 6 wherein the pins pass through holes (72) in the undulating screen.

9. The debris filter bottom nozzle (12) of Claim 1 wherein each undulation of the corrugated undulating screen (58) has either a top or a bottom and sides wherein the sides have a plurality of flow through holes and the bottoms have no flow through holes.

10. The debris filter bottom nozzle (12) of Claim 9 wherein the tops of the screen (58) have no flow through holes.

11. The debris filter bottom nozzle (12) of Claim 9 wherein the tops and bottoms of the screen (58) are rounded.

12. The debris filter bottom nozzle (12) of Claim 9 wherein the sides are slanted.

13. The debris filter bottom nozzle (12) of Claim 9 wherein the holes are slots (66).

14. The debris filter bottom nozzle (12) of Claim 13 wherein a length of the slots (66) is less than or equal to the length of debris that the screen (58) is intended to trap and a width of the slots (66) less than or equal to a diameter of the debris that the screen (58) is intended to trap.

15. The debris filter bottom nozzle (12) of Claim 13 wherein the tops and bottoms of the screen (58) are rounded and the length of the slots (66) is substantially equal to a diameter of the rounded tops and bottoms.

16. The debris filter bottom nozzle (12) of Claim 13 wherein the slots (66) are arranged horizontally.

17. A fuel assembly for a pressurized water nuclear reactor having a debris filter bottom nozzle of any of claims 1 to 16.

## Patentansprüche

1. Teilchenfilter-Bodenmundstück (12) für ein Druckwasserreaktor-Kembrennelement (10) mit einer Mehrzahl langgestreckter Kembrennstäbe (22) mit einer ausgedehnten axialen Länge, mindestens einem untersten Gitter (20) das die Brennstäbe (22) in einer organisierten Anordnung abstützt und darin gebildete freie Räume aufweist, die ein Hindurchströmen von flüssigem Kühlmittel und an den genannten Brennstäben (22) vorbei ermöglichen, wenn das Brennelement in dem Kernreaktor installiert ist, einer Mehrzahl von Führungsrohren (18) die sich entlang der genannten Brennstäbe durch das Gitter (20) erstrecken und dieses tragen, wobei das Teilchenfilter-Bodenmundstück (12) dafür ausgelegt ist, unter dem genannten Gitter (20) unter unteren Enden der genannten Brennstäbe (22) angeordnet zu werden, um die genannten Führungsrohre (18) abzustützen und das Einströmen von flüssigem Kühlmittel in das Brennelement zu ermöglichen, wobei das Teilchenfilter-Bodenmundstück (12) aufweist:
eine im wesentlichen horizontale Adapterplatte (46), die sich im wesentlichen quer zur Achse der Brennstäbe (22) erstreckt und eine Oberseite hat, die dem untersten Gitter (20) zugewandt ist, wobei in der Oberseite dieser Adapterplatte (46) eine Mehrzahl von Strömungsdurchgangsöffnungen (48) gebildet ist, die sich für den Durchtritt von Kühlflüssigkeit von einer Unterseite der Adapterplatte zur Oberseite der Adapterplatte vollständig durch die Adapterplatte (46) erstrecken, wobei jede der Kühlmittelströmungsdurchgangsöffnungen im in das Brennelement eingebautem Zustand sich im wesentlichen in der Axialrichtung der Brennstäbe (22) in Strömungsrichtung mit den genannten freien Räumen erstrecken, und
eine Schürze (40) mit Wänden, welche die Unterseite der Adapterplatte umschreiben, wobei ein Sieb (58) sich quer über einen unteren Teil der Schürze (40) erstreckt und im wesentlichen einen Boden derselben überdeckt und eine Kammer (62) zwischen der Unterseite der Adapterplatte (46) und dem Sieb (58) bildet,
**dadurch gekennzeichnet, daß** das Sieb (58) ein Metallblech ist, das in eine wellenförmig gewundene Form gebogen ist.

2. Teilchenfilter-Bodenmundstück (12) nach Anspruch 1, wobei die Wellungen in dem Sieb (58) ein vorgegebenes positives Maß an Elastizität haben und so zusammengedrückt sind, daß sie eine Kraft auf gegenüberliegende Wände der Schürze (40) ausüben, an welchem ein Ende der Wellungen anliegt.

3. Teilchenfilter-Bodenmundstück (12) nach Anspruch 1, wobei das Sieb (58) aus einem Material hergestellt ist, das im wesentlichen den gleichen Wärmedehnungskoeffizienten wie die Schürze (40) hat.

4. Teilchenfilter-Bodenmundstück (12) nach Anspruch 1, wobei die Schürze (40) Strömungsdurchgangsöffnungen (64) in mindestens einem Teil seiner Wände hat, die in Strömungsverbindung mit der Kammer (62) zwischen der Unterseite der Adapterplatte (44) und dem Sieb (58) stehen.

5. Teilchenfilter-Bodenmundstück (12) nach Anspruch 4, wobei das Teilchenfilter-Bodenmundstück im wesentlichen quadratisch mit vier Seiten ist, und die Strömungsdurchgangsöffnungen (64) in allen vier Seiten der Schürze (40) vorgesehen sind.

6. Teilchenfilter-Bodenmundstück (12) nach Anspruch 1, wobei das wellenförmig gewundene Sieb (58) durch Stifte getragen wird, die zwischen gegenüberliegenden Wänden der Schürze (40) verlaufen.

7. Teilchenfilter-Bodenmundstück (12) nach Anspruch 6, wobei die Stifte bündig mit einer Außenoberfläche der genannten Wände sind.

8. Teilchenfilter-Bodenmundstück (12) nach Anspruch 6, wobei die Stifte durch Öffnungen (72) in dem gewellten Sieb verlaufen.

9. Teilchenfilter-Bodenmundstück (12) nach Anspruch 1, wobei jede Windung des gewellten gewundenen Siebs (58) entweder einen oberen oder einen unteren Bereich und Seitenbereiche hat, wobei die Seitenbereiche eine Mehrzahl von Strömungsdurchgangsöffnungen haben und die unteren Bereiche keine Strömungsdurchgangsöffnungen haben.

10. Teilchenfilter-Bodenmundstück (12) nach Anspruch 9, wobei die oberen Bereiche des Siebs (58) keine Strömungsdurchgangsöffnungen haben.

11. Teilchenfilter-Bodenmundstück (12) nach Anspruch 9, wobei die oberen und unteren Bereiche des Siebs (58) gerundet sind.

12. Teilchenfilter-Bodenmundstück (12) nach Anspruch 1, wobei die Seitenbereiche schräg gestellt sind.

13. Teilchenfilter-Bodenmundstück (12) nach Anspruch 9, wobei die Öffnungen Schlitze (66) sind.

14. Teilchenfilter-Bodenmundstück (12) nach Anspruch 13, wobei die Länge der Schlitze (66) kleiner oder gleich der Länge von Teilchen ist, die das Sieb (58) abfangen soll, und die Breite der Schlitze (66) kleiner als oder gleich dem Durchmesser der Teilchen ist, die das Sieb (58) abfangen soll.

15. Teilchenfilter-Bodenmundstück (12) nach Anspruch 13, wobei die oberen und unteren Bereiche des Siebs (58) gerundet sind und die Länge der Schlitze (66) im wesentlichen gleich dem Durchmesser der gerundeten oberen und unteren Bereiche ist.

16. Teilchenfilter-Bodenmundstück (12) nach Anspruch 13, wobei die Schlitze (66) horizontal angeordnet sind.

17. Brennelement für einen Druckwasserreaktor mit einem Teilchenfilter-Bodenmundstück nach einem der Ansprüche 1 bis 16.

## Revendications

1. Embout inférieur à filtrage de débris (12) pour assemblage combustible (10) de réacteur nucléaire à eau sous pression ayant une pluralité de barres de combustible nucléaire (22) allongées ayant une longueur axiale étendue, au moins une grille inférieure (20) supportant lesdites barres de combustible (22) dans un réseau organisé et dans laquelle sont définis des espaces inoccupés conçus pour permettre l'écoulement de fluide caloporteur à travers ces derniers et au-delà desdites barres de combustible (22) lorsque ledit assemblage combustible est installé dans le réacteur nucléaire, une pluralité de chaussettes de guidage (18) s'étendant le long desdites barres de combustible à travers et supportant ladite grille (20), ledit embout inférieur à filtrage de débris (12) étant destiné à être disposé en dessous de ladite grille (20), au-dessous des extrémités inférieures desdites barres de combustible (22), pour supporter lesdites chaussettes de guidage (18), et étant adapté pour permettre l'écoulement de fluide caloporteur dans ledit assemblage combustible, ledit embout inférieur à filtrage de débris (12) comprenant :
une plaque d'adaptation (46) sensiblement horizontale s'étendant sensiblement transversalement à l'axe des barres de combustible (22) et ayant une face supérieure devant être dirigée vers ladite grille inférieure (20), ladite face supérieure de ladite plaque d'adaptation (46) possédant une pluralité de trous traversants d'écoulement (48) s'étendant complètement à travers ladite plaque d'adaptation (46) pour le passage de fluide caloporteur depuis une face inférieure de ladite plaque d'adaptation vers la face supérieure de ladite plaque d'adaptation, chacun desdits trous traversants d'écoulement de caloporteur, lorsqu'ils sont intégrés dans ledit assemblage combustible, s'étendant sensiblement dans la direction axiale desdites barres de combustible (22), en communication fluidique avec lesdits espaces inoccupés ; et
une virole (40) ayant des parois, qui circonscrit la face inférieure de ladite plaque d'adaptation ; dans lequel
un écran (58) s'étend à travers une partie inférieure de ladite virole (40), recouvrant sensiblement une partie inférieure de celle-ci, et formant un plenum (62) entre la face inférieure de la plaque adaptatrice (46) et l'écran (58) ;
**caractérisé en ce que**
l'écran (58) est une feuille métallique qui est courbée en une forme striée ondulée.

2. Embout inférieur à filtrage de débris (12) selon la revendication 1, dans lequel les ondulations dans l'écran (58) possèdent une quantité positive prédéterminée d'élasticité et sont comprimées de manière à exercer une force sur les parois opposées de la virole (40) sur laquelle une extrémité des ondulations vient buter.

3. Embout inférieur à filtrage de débris (12) selon la revendication 1, dans lequel l'écran (58) est construit en un matériau qui a sensiblement le même coefficient de dilatation thermique que la virole (40).

4. Embout inférieur à filtrage de débris (12) selon la revendication 1, dans lequel la virole (40) possède des trous traversants d'écoulement (64) dans au moins une partie de ses parois, qui sont en communication fluidique avec le plenum (62) entre la face inférieure de la plaque d'adaptation (46) et l'écran (58).

5. Embout inférieur à filtrage de débris (12) selon la revendication 4, dans lequel l'embout inférieur à filtrage de débris est sensiblement carré avec quatre côtés, et les trous traversants d'écoulement (64) sont ménagés dans les quatre côtés de la virole (40).

6. Embout inférieur à filtrage de débris (12) selon la revendication 1, dans lequel l'écran (58) strié ondulé est supporté par des chevilles qui s'étendent entre des parois opposées desdites parois de la virole (40).

7. Embout inférieur à filtrage de débris (12) selon la revendication 6, dans lequel les chevilles sont de niveau avec une surface extérieure desdites parois.

8. Embout inférieur à filtrage de débris (12) selon la revendication 6, dans lequel les chevilles passent à travers des trous traversants (72) dans l'écran ondulé.

9. Embout inférieur à filtrage de débris (12) selon la revendication 1, dans lequel chaque ondulation de l'écran (58) strié ondulé possède soit un haut soit un bas, et des côtés, dans lequel les côtés possèdent une pluralité de trous traversants d'écoulement et les bas ne possèdent pas de trous traversants d'écoulement.

10. Embout inférieur à filtrage de débris (12) selon la revendication 9, dans lequel les hauts de l'écran (58) ne possèdent pas de trous traversants d'écoulement.

11. Embout inférieur à filtrage de débris (12) selon la revendication 9, dans lequel les hauts et les bas de l'écran (58) sont arrondis.

12. Embout inférieur à filtrage de débris (12) selon la revendication 9, dans lequel les côtés sont inclinés.

13. Embout inférieur à filtrage de débris (12) selon la revendication 9, dans lequel les trous sont des fentes (66).

14. Embout inférieur à filtrage de débris (12) selon la revendication 13, dans lequel une longueur des fentes (66) est inférieure ou égale à la longueur des débris que l'écran (58) est destiné à piéger, et une largeur des fentes (66) est inférieure ou égale à un diamètre des débris que l'écran (58) est destiné à piéger.

15. Embout inférieur à filtrage de débris (12) selon la revendication 13, dans lequel les hauts et les bas de l'écran (58) sont arrondis et la longueur des fentes (66) est sensiblement égale à un diamètre des hauts et des bas arrondis.

16. Embout inférieur à filtrage de débris (12) selon la revendication 13, dans lequel les fentes (66) sont disposées horizontalement.

17. Assemblage combustible pour un réacteur nucléaire à eau sous pression ayant un embout inférieur à filtrage de débris selon l'une quelconque des revendications 1 à 16.
